(19) Europäisches Patentamt
European Patent Office
Office européen des brevets

(11) **EP 1 303 159 A2**

(12) **EUROPÄISCHE PATENTANMELDUNG**

(43) Veröffentlichungstag:
**16.04.2003 Patentblatt 2003/16**

(51) Int Cl.⁷: **H04Q 9/00**

(21) Anmeldenummer: **02450234.6**

(22) Anmeldetag: **16.10.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **16.10.2001 AT 16342001**

(71) Anmelder: **Bier, Günther, Ing.
1200 Wien (AT)**

(72) Erfinder: **Bier, Günther, Ing.
1200 Wien (AT)**

(74) Vertreter: **Kliment, Peter, Dipl.-Ing.
Patentanwalt
Dipl.-Ing. Mag.jur. Peter Kliment
Singerstrasse 8
1010 Wien (AT)**

(54) **Verfahren zum ansteuern eines beliebigen Verbrauchers**

(57) Verfahren zum Ansteuern eines beliebigen Verbrauchers aus einer Vielzahl von an einem Bus (8, 3) angeschlossenen Verbrauchern (20). Um die Verbraucher auf einfache Weise ansteuern zu können, ist vorgesehen, dass auf den Bus (8) ein zwischen mindestens zwei Spannungspegeln schwankender Impulszug mit einer vorbestimmten Anzahl von Impulsen gelegt wird, und jeder der an dem Bus angeschlossenen Verbraucher (20) auf ein bestimmtes Muster der Impulse anspricht.

Fig. 1

EP 1 303 159 A2

**Beschreibung**

Die Erfindung bezieht sich auf ein Verfahren zum Ansteuern eines beliebigen Verbrauchers gemäß dem Oberbegriff des Anspruches 1. Weiters bezieht sich die Erfindung auf eine Einrichtung zur Durchführung eines solchen Verfahrens.

Bei solchen Verbrauchern kann es sich z.B. um Zähler handeln, die einzelweise angesteuert und abgefragt werden.

Bei einem bekannten derartigen Verfahren wird der Bus mit unterschiedlichen Trägerfrequenzen beaufschlagt, wobei den einzelnen Verbrauchern auf die verschiedenen Trägerfrequenzen abgestimmte Filterschaltungen vorgeordnet sind. Dabei erfolgt die Energieversorgung der einzelnen Verbraucher über die erwähnten Filter.

Bei diesem Verfahren ergibt sich der Nachteil, dass sich durch die Filter ein sehr erheblicher Aufwand ergibt. Dazu können sich, insbesondere bei langen Busstrecken, erhebliche Probleme ergeben. Außerdem ergibt sich durch die erforderlichen Abstände zwischen den einzelnen Trägerfrequenzen eine entsprechende Beschränkung der nach diesem bekannten Verfahren ansteuerbaren und an dem selben Bus angeschlossenen Verbraucher.

Ziel der Erfindung ist es, diese Nachteile zu vermeiden und ein Verfahren der eingangs erwähnten Art vorzuschlagen, das sich einfach durchführen lässt und die Ansteuerung einer großen Anzahl von Verbrauchern ermöglicht.

Erfindungsgemäß wird dies bei einem Verfahren der eingangs erwähnten Art durch die kennzeichnenden Merkmale des Anspruches 1 erreicht.

Durch die vorgeschlagenen Maßnahmen ergibt sich der Vorteil, dass jeder einzelne Verbraucher sehr exakt und mit hoher Trennschärfe angesteuert werden kann, wobei in der Praxis mit nur geringem schaltungstechnischen Aufwand das vorgeschlagene Verfahren durchgeführt werden kann.

Ein weiteres Ziel der Erfindung ist es, eine Einrichtung zur Durchführung des erfindungsgemäßen Verfahrens vorzuschlagen.

Ausgehend von einer Einrichtung gemäß dem Oberbegriff des Anspruches 2 werden gemäß der Erfindung die kennzeichnenden Merkmale des Anspruches 2 vorgeschlagen.

Auf diese Weise können über den Bus Impulszüge mit verschiedenen Impulsmustern übertragen werden, wobei jeder Verbraucher auf ein bestimmtes Impulsmuster anspricht und auf diese Weise angesteuert werden kann.

Durch die Merkmale des Anspruches 3 ergibt sich eine in konstruktiver Hinsicht sehr einfache Lösung. So kann durch wechselweises Durchschalten der Schalter die Spannung des Busses auf einfache Weise beeinflusst werden.

Grundsätzlich ist es aber auch möglich die Spannungsquellen, die verschieden hohe Spannungen liefern, parallel zu schalten und wahlweise mit dem Bus zu verbinden.

Dabei ist es auch möglich einen der Schalter als Diode auszubilden.

Durch die Merkmale des Anspruches 5 ergibt sich der Vorteil, dass Impulszüge mit unterschiedlichen Spannungspegeln erzeugt werden können. Dadurch kann eine große Anzahl von Verbrauchern mit Impulszügen mit relativ wenigen Impulsen einzelweise angesteuert werden. Dabei ergeben sich die Impulszüge mit unterschiedlichen Spannungspegeln durch Ansteuern der Schalter mit unterschiedlicher Frequenz, von denen eine ein Vielfaches der Frequenz der Impulse innerhalb eines Impulszuges beträgt.

Beträgt z.B. die Ruhespannung eines Busses 32 Volt so kann ein Impulszug durch Absenken der Busspanung gemäß einem bestimmten, auf einen bestimmten Verbraucher abgestimmten Protokoll erzeugt werden. Erfolgt die Spannungsabsenkung mit einer Frequenz, die nicht höher als die Frequenz der Impulse innerhalb eines Impulszuges ist und erfolgt die Absenkung auf z.B. 24 Volt, so kann durch Ansteuerung der Schalter mit einer die Frequenz der Impulse innerhalb eines Impulszuges übersteigenden Frequenz und einer nachgeschalteten Glättung die abgesenkte Spannung z.B. auf einen Wert von 28V gebracht werden. Auf diese Weise können mit sonst gleichen Protokollen zwei verschiedene Verbraucher angesteuert werden.

Durch die Merkmale des Anspruches 6 ist es ebenfalls möglich Impulszüge mit unterschiedlich hohen Spannungspegeln herzustellen.

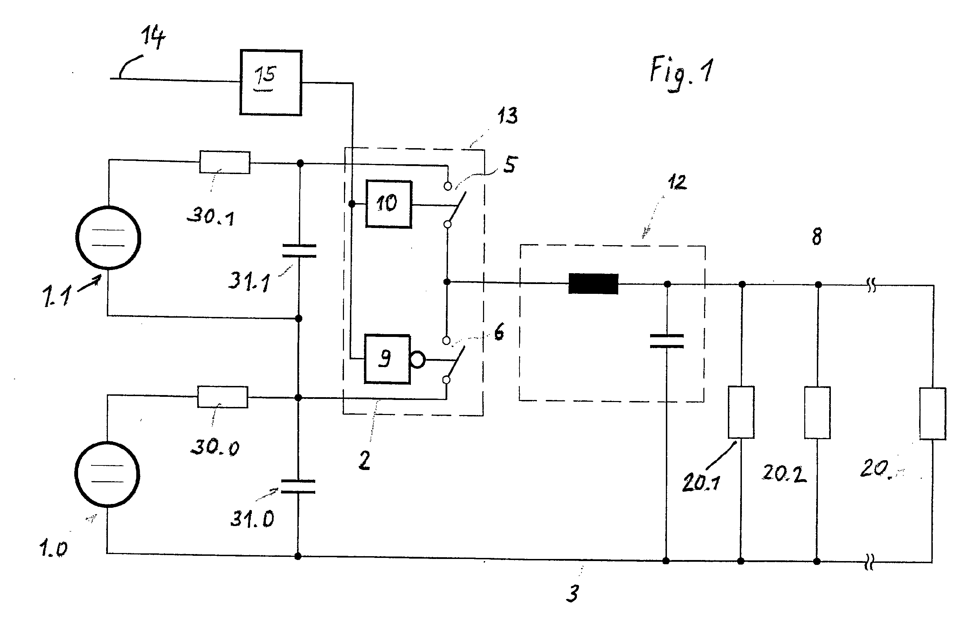

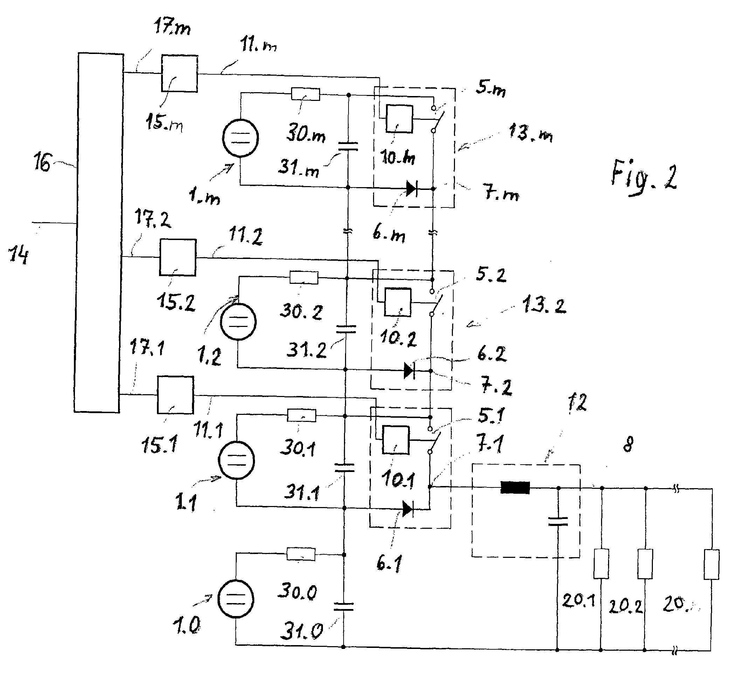

Die Erfindung wird nun anhand der Zeichnung näher erläutert. Dabei zeigen die Fig. 1 und 2 Blockschaltbilder verschiedener Ausführungsformen einer erfindungsgemäßen Einrichtung.

Die Vorrichtung nach der Fig.1 weist Spannungsquellen 1.0 und 1.1 mit Innenimpedanzen 30.0 und 30.1 und den Ausgangskondensatoren 31.0 und 31.1 auf. Die Ausgangskondensatoren 31.0 und 31.1 sind in Serie geschaltet. Der negative Anschluss des Kondensators 31.0 ist an eine Erdleitung 3 angeschlossen. Der positive Anschluss ist mit dem negativen Anschluss des Kondensators 31.1 verbunden. Am Kondensator 31.1 ist eine leistungselektronische Schaltvorrichtung 13 angeschlossen. Die Schalteinrichtung 13 besteht aus der Serienschaltung der Leistungsschalter 5 und 6, die den Mittelpunkt 7 bilden und den Steuereinrichtungen 9 und 10, die ein binäres Signal auf der Leitung 11 in Schaltbefehle für die Leistungsschalter 5 und 6 umsetzen. An dem Mittelpunkt 7 und an der Erdleitung 3 ist ein Ausgangsfilter 12 z.B. ein LC-Filter, angeschlossen. Der Ausgang des Filters ist mit einer positiven Versorgungsleitung 8 des M-Busses verbunden. Der Schalter 6 kann auch als Diode ausgebildet sein.

Die Steuereinrichtung 9 für den Schalter 6 sowie die Steuereinrichtung 10 für den Schalter 5 stellen sicher, dass beide Schalter nicht zugleich eingeschaltet werden können. Wird der Schalter 5 geschlossen, ist eine Leitung 8 mit dem positiven Anschluss des Ausgangskondensators 31.1 der Spannungsquelle 1.1 verbunden. Die Leitung 8 wird von den in Serie geschalteten Ausgangskondensatoren 31.0 und 31.1 der Spannungsquellen 1.0 und 1.1 versorgt. Bei geschlossenem Schalter 6 ist Leitung 8 mit dem negativen Anschluss des Kondensators 31.1 verbunden. In diesem Fall wird die Leitung 8 von der Quelle 1.0 versorgt.

Die negative Versorgungsleitung des M-Busses wird von der Erdleitung 3 gebildet.

Das leistungsschwache Signal 11 wird auf die leistungsstarken Ausgangsspannungen der Quellen 1.0 und 1.1, die am Mittelpunkt 7 auftreten, verstärkt. An dem M-Bus, der von den Leitungen 8 und 3 gebildet ist, sind beliebig viele Verbraucher 20.1 bis 20.n angeschlossen.

Bei der Ausführungsform nach der Fig. 1 ist ein Datenumsetzer 15 vorgesehen, der die binär kodierten Zahlen im Signal auf Leitung 14 ausgangsseitig wahlweise in ein Signal höherer Frequenz und entsprechendem Tastverhältnis auf Leitung 11 umsetzt. Der Mittelpunkt 7 ist mit Filter 12 verbunden, an dem ausgangsseitig die Leitung 8 des M-Busses angeschlossen ist. Die zweite Leitung des M-Busses ist durch die Leitung 3 gebildet. Auf diese Weise ist es möglich den Hub der Impulse eines Impulszuges durch Aktivierung oder Nicht-Aktivierung des Datenumsetzers 15, der als Frequenzvervielfacher ausgebildet ist, zu verändern, wodurch es möglich ist mit ein und dem selben Protokoll eines Impulszuges wahlweise einen von zweien auf ein solches Protokoll ansprechenden Verbraucher anzusteuern, wobei diese beiden Verbraucher auf einen unterschiedlichen Hub der Impulse der sonst gleichen Impulszüge abgestimmt sind.

Bei der Sendeeinrichtung, bzw. Vorrichtung nach der Fig. 2, weisen die Spannungsquellen 1.0 bis 1.m innere Impedanzen 30.0 bis 30.m auf, deren Ausgangskondensatoren 31.0 bis 31.m in Serie geschaltet sind. An die Kondensatoren 31.1 bis 31.m ist jeweils eine Schalteinrichtung 13.1 bis 13.m angeschlossen. Die Schalteinrichtungen 13.1 bis 13.m bestehen aus den Leistungsschaltern 5.1 bis 5.m und 6.1 bis 6.m, die an Mittelpunkten 7.1 bis 7.m angeschlossen sind. Dabei sind die Schalter 6.1 bis 6.m durch Dioden gebildet.

Der Leistungsschalter 5.x der Schalteinrichtung 13.x schaltet den Mittelpunkt 7.x an den negativen Anschluss des Kondensators 31.x, der Schalter 6.x verbindet den Mittelpunkt 7.x mit dem Mittelpunkt 7.x+1 der nächsten Umschalteinrichtung 13.x+1.

Ein Demultiplexer 16 ist eingangsseitig mit der Leitung 14 verbunden und verteilt ein binäres, bzw. zwei Pegel aufweisendes Signal auf der Leitung 14 ausgangsseitig auf die Leitungen 17.1 bis 17.m auf. Das leistungsschwache Signal auf den Leitungen 11.1 bis 11.m wird durch die entsprechende Anzahl der mittels der Schaltvorrichtungen 13.1 bis 13.m in Serie schaltbaren leistungsstarken Spannungsquellen 1.1 bis 1.m, deren Spannungen an den Mittelpunkten 7.1 bis 7.m auftreten, verstärkt.

Die Leitung 3 ist mit der Spannungsquelle 1.0 verbunden, deren Ausgangsspannung der Low-Pegel für die Leitung 8 ist. Die Quellen 1.1 bis 1.m sind bei der Ausführungsform nach der Fig. 2 zweckmäßigerweise gleich groß gewählt und bilden die Stromversorgungen für die Leitung 8 bei den Zwischenstufen. Der High-Pegel von Leitung 8 ergibt sich aus der Summe aller Quellspannungen der Quellen 1.0 bis 1.m. An den M-Bus, der von den Leitungen 8 und 3 gebildet wird, sind beliebig viele Verbraucher 20.1 bis 20.n angeschlossen.

An die ausgangsseitig des Demultiplexers 16 angeschlossenen Leitungen 17.1 bis 17.m sind Datenumsetzer 15.1 bis 15.m angeschaltet, die als Frequenzvervielfacher ausgebildet sind und die über Leitungen 11.1 bis 11.m mit Steuereinrichtungen, bzw. Treiberschaltungen 10.1 bis 10.m verbunden, die die Schalter 10.1 bis 10.m ansteuern.

Die Frequenzvervielfacher 15.1 bis 15.m können wahlweise aktiviert werden und ermöglichen es den Hub der Impulse der Impulszüge zu verändern, wie bereits anhand der Fig. 1 erläutert wurde.

Die Erfindung ist beispielsweise zur automatischen Ablesung von Zählern geeignet. Mehrere Zähler, die Slaves, sind über den sogenannten Masterbus, kurz M-Bus, mit einem Master verbunden. Der Master versorgt alle Slaves und kann sowohl senden, wenn er einem Slave befielt, seinen Zählerstand zu senden, als auch die Botschaft empfangen, die er zwischenspeichern und - oder gleich - an einen PC weitergeben kann. Die Erfindung beschreibt die Sendeeinrichtung des Masters, die zugleich die Stromversorgung des M-Busses bildet.

Die Ruhespannung des M-Busses beträgt z.B. 32 Volt. Der Master sendet, indem er die Busspannung gemäß eines Protokolls gewisse Zeitintervalle auf 24 Volt absenkt. In jedem Fall sind die Slaves, mit z.B. insgesamt 200W zu versorgen.

Derzeit werden entsprechend leistungsstarke Operationsverstärker eingesetzt. Der Wirkungsgrad der Analogverstärkung ist gering, Gewicht und Volumen sind entsprechend groß. Die Verluste werden insbesondere bei hohen Datenraten dadurch nennenswert vergrößert, dass die Slaves Erdkapazitäten aufweisen, die bei jeder Änderung der Busspannung auf- und wieder entladen werden müssen.

Bei der analogen Verstärkung beträgt die Verlustleistung $P_V$ $P_V = I_L * (U_S - U_B)$.

$I_L$ ist der Laststrom. Bei 24V Busspannung und 240W beträgt er 10 Ampere. $U_S$ ist die Versorgungsspannung der Operationsverstärker, die über dem Highpegel der Busspannung $U_B$ liegen muß. Sie beträgt beispielsweise 40V. In diesem Fall ergibt sich die Verlustleistung zu 160W, die von entsprechend großen Kühlkörpern in Form von Wärme abgegeben wird.

Nach der Erfindung wird das Prinzip der digitalen Verstärkung angewendet. Für Low- und Highpegel des M-Busses wird je eine Stromversorgung zur Verfügung gestellt. Beim Ausführungsbeispiel nach der Fig. 1 sind zwei Stromversorgungen in Reihe geschaltet. Der Low-Pegel wird von einer Stromversorgung gespeist, der High-Pegel ergibt sich aus der Summe der Ausgangsspannungen beider Stromversorgungen. Mittels elektronischer Leistungsschalter wird der M-Bus mit den entsprechenden Versorgungsspannungen für Low- und High-Pegel verbunden. Dabei fließt der Laststrom IL immer über einen Leistungsschalter, wobei die Verlustleistung

$$P_V = I_L * U_F$$

anfällt, wobei UF die Spannung am Leistungsschalter im stromführenden Zustand ist. Die Verlustleistung ergibt sich bei gleicher Belastung und $U_F = 1V$ vorteilhaft zu 10W.

Bei analoger Verstärkung fließen die Lade- und Entladeströme verlustbehaftet über den Operationsverstärker. Für die folgende Abschätzung wird dieser durch einen gesteuerten Widerstand $R_1$ in Serie mit dem Ausgangswiderstand R2 ersetzt. $R_1$ wird so gesteuert, dass am Mittelpunkt die verstärkte Steuerspannung auftritt. Unter der Vorraussetzung, dass sich diese Spannung, die Spannung am M-Bus, gegenüber der Ladezeitkonstante $\tau = R_2 * C_E$ rasch ändert, ergeben sich die Verlustleistungen in $R_1$ und $R_2$ beim Auf- und Entladen zu

$$P = P_{R1+} + P_{R1-} + P_{R2} \ ,$$

wobei

$$P_{R1-} \sim f\,C_E(U_S - U_{BH}) \cdot (U_{BH} - U_{BL})$$

$$P_{R1-} \sim P_{R1+}$$

$$P_{R1-} \sim f\,C_E\,U_{BL}\,(U_{BH} - U_{BL})$$

entspricht

$U_{BH}$ die Busspannung bei High-Pegel, $U_{BL}$ die Busspannung bei Low-Pegel und $C_E$ die Erdkapazität bedeuten

Bei einer Erdkapazität von $C_E = 1\mu F$, einer Datenrate von f = 100kBit/sek und den Spannungen $U_S$ = 40V, $U_{BH} = 32V$ und $U_{BL} = 24V$ ergeben sich näherungsweise $P_{R1}$ zu 40W und $P_{R2}$ zu 50W. Bei digitaler Verstärkung entfallen die Verlustanteile in $R_1$.

Um das Schwingen der M-Busspannung aufgrund der verteilten Leitungsinduktivitäten und Erdkapazitäten zu dämpfen sind insbesondere bei hohen Datenraten mehrstufige Filter zur Leitungsanpassung notwendig. Durch die Merkmale des Anspruches 2 ergibt sich ein einfacher Filter. Durch gestellte oder geregelte kurzzeitige Zurückschaltung in den Vorzustand kann das Überschwingen der M-Busspannung wirkungsvoll gedämpft werden. Desweiteren kann die Datenrate in diesem Fall auch dadurch erhöht werden, dass beliebige Zwischenstufen der Busspannung ohne Änderung der Sendestromversorgung eingestellt werden können. Der Sendestromversorgung wird ein Datenumsetzer vorgeschaltet. Mehrere Bits des leistungsschwachen Sendesignales werden als binär kodierte Zahl aufgefasst und in ein Tastverhältnis umgesetzt. Jedem Tastverhältnis entspricht eine bestimmte Ausgangsspannung des M-Busses, die nun entsprechend viele Pegel aufweisen kann. Der Datenumsetzer kann beispielsweise mittels n Digitalkomparatoren realisiert werden, die jenen Multivibrator anstoßen, dessen rechteckförmige Ausgangsspannung das Tastverhältnis aufweist, das der binär codierten Zahl entspricht. Die Multivibratoren arbeiten mit der gleichen Frequenz mit der die leistungselektronische Schaltvorrichtung umschaltet. Diese Frequenz sollte ein Vielfaches der Datenrate betragen. Bei hohen Datenraten geraten die elektronischen Leistungsschalter an die Grenzen ihrer Schaltgeschwindigkeit.

Die Erhöhung der Pegel der Ausgangsspannung kann durch eine entsprechende Erhöhung der Anzahl der Pegelstromversorgungen erfolgen und der leistungselektronischen Umschaltvorrichtungen. Der Vorteil besteht insbesondere bei hohen Datenraten darin, dass die Schaltfrequenzen der Vorrichtungen 13.1 bis 13.m in der Fig.2 nicht mehr ein Vielfaches der Datenrate betragen müssen. M Pegelstromversorgungen mit daran angeschlossenen leistungselektronischen Umschaltvorrichtungen sind in Serie geschaltet. Der Demultiplexer generiert aus dem Eingangsdatenstrom m Steuersignale für m Umschaltvorrichtungen. Die Pegel werden nicht mehr vom Tastverhältnis einer leistungselektronischen Umschaltvorrichtung, die mit einer gegenüber der Datenrate hohen Frequenz umzuschalten hat, bestimmt, sondern vom Schaltzustand der m in Serie geschalteten Umschaltvorrichtungen.

Ist der Verbraucherstrom in Leitung 8 zu gering, um bei einem Sprung nach unten die Erdkapazitäten ausreichend schnell auf das entsprechende Spannungsniveau zu entladen, so sind die Dioden 6.1 bis 6.m als steuerbare Schalter auszuführen.

## Patentansprüche

1. Verfahren zum Ansteuern eines beliebigen Verbrauchers aus einer Vielzahl von an einem Bus (8, 3) angeschlossenen Verbrauchern (20), **dadurch gekennzeichnet, dass** auf den Bus (8) ein zwischen mindestens zwei Spannungspegeln schwankender Impulszug mit einer vorbestimmten Anzahl von Impulsen gelegt wird, und jeder der an dem Bus angeschlossenen Verbraucher (20) auf ein bestimmtes Muster der Impulse anspricht.

2.  Einrichtung zur Durchführung des Verfahrens gemäß Anspruch 1 bei der eine Spannungsquelle (1.1) über einen Schalter (6) mit dem Bus (8) verbindbar ist, **dadurch gekennzeichnet, dass** mindestens eine weitere Spannungsquelle (1.2) vorgesehen ist, die über einen weiteren Schalter (5) mit dem Bus (8) verbindbar ist.

3.  Einrichtung gemäß Anspruch 2, **dadurch gekennzeichnet, dass** zwei Spannungsquellen (1.1, 1.2) in Reihe geschaltet sind, wobei eine mit Masse verbunden ist und einer der Schalter (6) an dem Verknüpfungspunkt (7) der beiden Spannungsquellen (1.1, 1.2) und dem Bus (8) und der zweite Schalter (5) an dem freien Anschluss der zweiten Spannungsquelle (1.2) und dem Bus (8) angeschlossen ist, wobei die beiden Schalter (5, 6) wechselweise verriegelt sind.

4.  Einrichtung gemäß Anspruch 2 oder 3, **dadurch gekennzeichnet, dass** einer der Schalter (6) als Diode ausgebildet ist.

5.  Einrichtung gemäß einem der Ansprüche 2 bis 4, **dadurch gekennzeichnet, dass** den Schaltern (5, 6) eine Treiberschaltung (9, 10) vorgeschaltet ist, der eine wahlweise aktivierbare Frequenzvervielfacherschaltung (15) vorgeschaltet ist.

6.  Einrichtung gemäß einem der Ansprüche 2 bis 4, **dadurch gekennzeichnet, dass** mehr als zwei Spannungsquellen (1.1, 1.2, .. 1.m) in Reihe geschaltet sind die über in Reihe geschaltete Schalter (5, 6; 5.1, 6.1, 5.m, 6.m)) mit dem Bus (3, 8) verbindbar sind, wobei die Spannungsquellen (1.1, 1.2, 1.m über Dioden (6.1, 6.2,... 6.m) mit den Schaltern (5.1, 5.2, .. 5.m) verbunden sind.

Fig. 1

Fig. 2